(19) Europäisches Patentamt
European Patent Office
Office européen des brevets

(11) EP 2 045 408 B1

## (12) EUROPÄISCHE PATENTSCHRIFT

(45) Veröffentlichungstag und Bekanntmachung des Hinweises auf die Patenterteilung:
**23.01.2013 Patentblatt 2013/04**

(51) Int Cl.:
*E04B 1/74* *(2006.01)*     *C04B 18/26* *(2006.01)*

(21) Anmeldenummer: **08016760.4**

(22) Anmeldetag: **24.09.2008**

(54) **Wärmedämmstoff mit Zellulosefasern und Verfahren zu dessen Herstellung**

Heat insulation material with cellulose fibres and method for producing same

Isolant thermique doté de fibres cellulosiques et son procédé de fabrication

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.10.2007 DE 102007047542**

(43) Veröffentlichungstag der Anmeldung:
**08.04.2009 Patentblatt 2009/15**

(73) Patentinhaber: **Isofloc Wärmedämmtechnik GmbH**
**34253 Lohfelden (DE)**

(72) Erfinder:
• **Al Samarraie, Ahmed**
**36199 Rotenburg (DE)**

• **Tröger, Johannes, Prof. Dr.**
**71229 Leonberg (DE)**
• **Gross, Lucia, Dipl.-Ing.**
**70174 Stuttgart (DE)**

(74) Vertreter: **Dantz, Jan Henning**
**Loesenbeck - Specht - Dantz**
**Patent- und Rechtsanwälte**
**Am Zwinger 2**
**33602 Bielefeld (DE)**

(56) Entgegenhaltungen:
**EP-A1- 1 582 646     DE-A1- 19 516 186**
**DE-A1- 19 539 309**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 045 408 B1

**Beschreibung**

Die Erfindung betrifft einen Wärmedämmstoff mit Zellulosefasern und ein Verfahren zu dessen Herstellung.

Zur Wärmeisolierung von Gebäuden ist es allgemein bekannt, deren Böden, Decken, Wände, Dächer od. dgl. mit aus Glas- oder Mineralfasern bestehenden Matten zu belegen. Als preisgünstige Alternative hierzu ist die Anwendung von Wärmedämmstoffen aus Holzspänen, insbesondere Hobel- bzw. Frässpänen, sowie aus Zellulosefasern bzw. -flocken bekannt, die aus Altpapier, insbesondere recyceltem Zeitungspapier gewonnen werden. Wärmedämmstoffe dieser Art werden entweder als Schüttgut verwendet oder mit Hilfe von Blasvorrichtungen od. dgl. in vorbereitete Hohlräume eingeblasen, die im Falle von Fertighäusern auch aus vorgefertigten, quaderförmigen Rahmenelementen bestehen können (z. B. DE 199 06 138 A1, DE 103 26 515 A1).

Ein Nachteil bei der Anwendung von Holzspänen und Zellulosefasern besteht darin, dass diese bei geringen, für eine gute Wärmedämmung zu geringen Einbaudichten zu nachträglichen Setzungen führen. Derartige Setzungen haben die Bildung von Wärmebrücken und damit Energieverluste zur Folge. Es ist daher üblich, Wärmedämmstoffe dieser Art mit so hohen Dichten einzubauen, dass nachträgliche Setzungen ausgeschlossen sind. Die DE 195 16 186 offenbart ein Dämmmaterial aus Naturprodukten, das mit einem geringen Papieranteil auskommen soll und schwer entflammbar ist. Hierfür werden verschiedene Naturfasern eingesetzt, die dann unter Beimengung weiterer Zusatzstoffe gemischt, verarbeitet und getrocknet werden. Während für Holzspäne Einbaudichten von z. B. ca. 65 kg/m$^3$ als setzungssicher gelten, haben sich für qualitativ gute, lange Zellulosefasern aus Altpapier Dichten von ca. 58 kg/m$^3$ und für kurze Zellulosefasern Dichten von ca. 70 kg/m$^3$ als setzungssicher erwiesen. Das führt allerdings zu dem weiteren Nachteil, dass die Wärmedämmstoffe bei diesen Dichten eine geringere Wärmedämmung als bei den für die Wärmedämmung optimalen Dichten aufweisen. Untersuchungen haben gezeigt, dass eine hohe Setzungsicherheit und eine gute Wärmedämmung in entgegengesetzte Richtungen laufen und eine besonders gute Wärmedämmung mit Einbaudichten im Bereich von ca. 40 kg/m$^3$ erreicht wird. Das hat auch Folgen für die Kosten, die für eine gewünschte Wärmedämmung entstehen, weil Dämmstoffe mit einer vergleichsweise höheren Wärmeleitzahl λ eine entsprechend erhöhte Dicke d der Wärmedämmstoffschicht erfordern, um denselben U-Wert (U = λ : d) zu erhalten.

Im speziellen Fall von Zellulosefasern geht die Entwicklung als Folge des immer häufiger recycelten Altpapiers (Zeitungspapiers) hin zu immer kürzeren Fasern. Daher tritt hier die beschriebene Unvereinbarkeit von guter Wärmedämmwirkung, Setzungssicherheit und geringem Preis im besonderen Maße hervor.

Da Zellulosefasern dennoch ein für die Wärmedämmung gut geeigneter Dämmstoff sind, liegt der Erfindung das technische Problem zugrunde, einen Zellulosefasern enthaltenden Wärmedämmstoff zu schaffen, der unabhängig von der Länge der Zellulosefasern mit einer Setzungsdichte eingebaut werden kann, die näher als bisher an dem für eine optimale Wärmedämmung zweckmäßigen Dichtewert liegt.

Zur Lösung dieser Aufgabe enthält der erfindungsgemäße Wärmedämmstoff eine Matrix aus federelastischen, Hohlräume bildenden Holzspänen und in die Hohlräume eingelagerte Zellulosefasern.

Ein zur Herstellung eines derartigen Wärmedämmstoffs geeignetes Verfahren ist erfindungsgemäß dadurch gekennzeichnet, dass federelastische Holzspäne hergestellt werden, indem ein Stamm aus einem feuchten Holz mit einem Kegelstirnradfräswerkzeug bearbeitet wird und die dadurch erhaltenen Holzspäne getrocknet und mit Zellulosefasern vermischt werden.

Die Erfindung bringt den überraschenden Vorteil mit sich, dass die federelastischen Holzspäne ein stabiles Stützgerüst bilden, das eine Setzungsdichte von nur ca. 30 kg/m$^3$ besitzt. Dadurch wird, wenn die Holzspäne mit Zellulosefasern vermischt sind, einerseits die gewünsche Federelastizität und damit Setzungsicherheit, die insbesondere kurzen Zellulosefasern fehlt, hergestellt. Andererseits wird erreicht, dass insgesamt ein Kompositdämmstoff entsteht, der eine deutlich reduzierte, aber dennoch setzungssichere Einbaudichte bezüglich der Zellulosefasern hat, die auch hier zum weitaus überwiegenden Teil die Funktion der Wärmedämmung ausüben. Selbst mit schlechten, d. h. der kurzen Zellulosefasern konnte bei einem Mischungsverhältnis von Fasern zu Spänen von 1 : 1 eine setzungssichere Einbaudichte von ca. 40 kg/m$^3$ realisiert und dadurch eine Annäherung an den optimalen Wärmeleitwert erzielt werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:

Fig. 1 schematisch einen mit dem erfindungsgemäßen Wärmedämmstoff gefüllten Hohlkörper;

Fig. 2 eine Seitenansicht eines für die Herstellung von federelastischen Holzspänen besonders gut geeigneten Kegelstirnplanfräskopfs;

Fig. 3 eine Vorderansicht des Kegelstirnplanfräskopfs nach Fig. 2;

Fig. 4 ein aus mehreren Kegelstirnplanfräsköpfen nach Fig. 2 zusammengesetztes Werkzeug; und

Fig. 5 schematisch die erfindungsgemäße Herstellung von federelastischen Holzspänen aus einem Holzstamm.

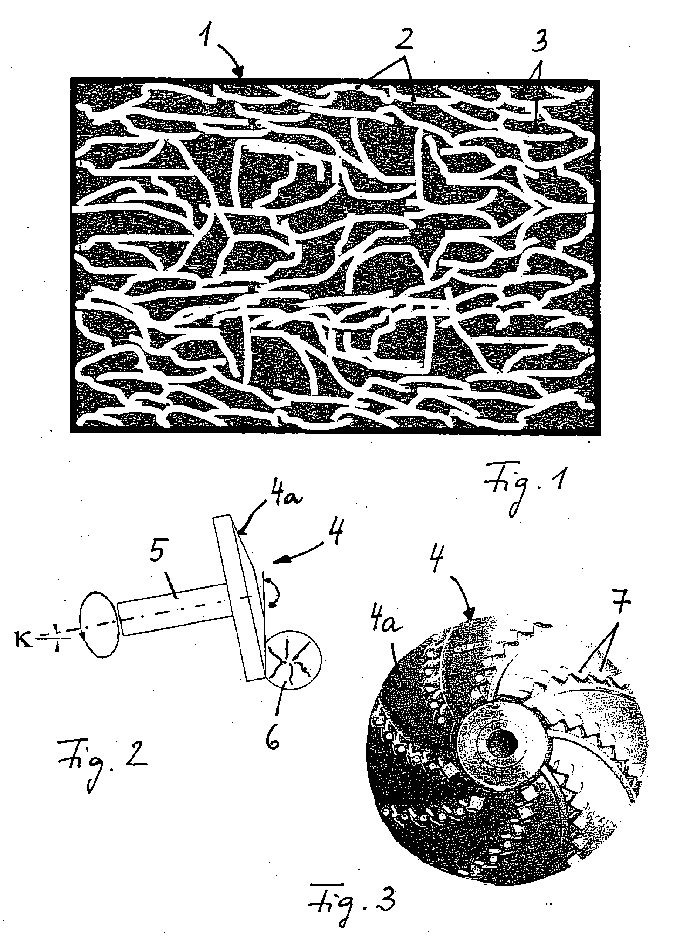

In Fig. 1 soll das Bezugszeichen 1 einen mit einem erfindungsgemäßen Wärmedämmstoff gefüllten Hohlkörper andeuten. Der Wärmedämmstoff enthält eine den Hohlkörper 1 ausfüllende Matrix aus mit weißen Linien angedeuteten, übertrieben groß dargestellten, federelastischen Holzspänen 2, die zwischen sich eine Vielzahl von Hohlräumen bilden, und aus mit schwarzer Schattierung angedeuteten Zellulosefasern 3, die in die Hohlräume eingelagert sind. Die Holzspäne 2 weisen vorzugsweise eine Länge von ca. 10 mm bis 20 mm, eine Dicke von ca. 0,05 mm bis 0,4 mm und eine Breite von ca. 5 mm bis 15 mm auf. Dagegen handelt es sich bei den Zellulosefasern 3 um solche, wie sie üblicherweise für Wärmedämmzwecke verwendet und z. B. unter der Marke "Isofloc" vertrieben werden. Derartige Zellulosefasern können z. B. eine Durchschnittslänge von ca. 0,5 mm bis 9 mm und einen Duchmesser von z.B. 0,1 mm bis 0,2 mm besitzen, was weitgehend davon abhängt, aus einem wie oft recycelten Altpapier sie hergestellt wurden. Das Mischungsverhältnis der Holzspäne 2 mit den Zellulosefasern 3 beträgt vorzugsweise 20 : 80 bis 80 : 20 in Massen%, bezogen auf die Gesamtmasse. Etwa vorhandene Zuschlagstoffe wie z. B. mineralische Salze, Pilz- und Brandschutzmittel od. dgl. sind für die Erfindung unwesentlich und werden daher hier nicht berücksichtigt.

Die federelastischen Holzspäne 2 bilden, wie Fig. 1 andeutet, eine setzungssichere Matrix bzw. ein Stützgerüst geringer Dichte, dessen Hohlräume die viel feineren Zellulosefasern 3 in sich aufnehmen, ohne dass sich die einzelnen Komponenten entmischen und sich z. B. die Zellulosefasern 3 durch ihr Eigengewicht am Boden des Hohlkörpers 1 oder, wenn es sich um eine lose Schüttung handelt, auf der Unterlage der Schüttung ansammeln. Dadurch wird das Zellulosematerial weit weniger als bisher durch sein Eigengewicht belastet. Die federelastischen Holzspäne 2 haben eine setzungssichere Dichte von z. B. ca. 30 g/m$^3$. Da die Zellulosefasern 3 nur in den Hohlräumen der Holzspäne 2 angeordnet sind, haben auch sie eine deutlich geringere Dichte als der üblichen, minimalen Setzungsdichte von ca. 58 kg/m$^3$ entspricht, wodurch ihre Wärmeleitfähigkeit deutlich reduziert ist. Da die Holzspäne 2 außerdem preiswerter als Zellulosefasern sind, folgt daraus auch, dass der Preis des erfindungsgemäßen, zusammengesetzten Wärmedämmstoffs niedriger als der für einen Wärmedämmstoff aus reinen Zellulosefasern ist.

Die Mischung der Holzspäne und der Zellulosefasern kann mechanisch z. B. mittels eines Trommelmischers oder pneumatisch erfolgen, indem die einzelnen Stoffe mittels je einer herkömmlichen Einblasmaschine in einen gemeinsamen Vorratsbehälter eingeblasen werden. Dieser kann gleichzeitig als rotierende, vorzugsweise zylindrische Trommel ausgebildet oder mit einem Rührwerk versehen sein, um eine innige Vermischung zu gewährleisten. Es muss als überraschend angesehen werden, dass in dem so hergestellten Wärmedämmstoff auch sehr kurze Zellulosefasern die Hohlräume zwischen den Holzspänen gut ausfüllen und keine Entmischung beim späteren Verarbeiten und/oder Transport des Kompositmaterials eintritt.

Als setzungssichere Dichten für den erfindungsgemäßen Wärmedämmstoff haben sich bisher Dichten zwischen 30 kg/m$^3$ und 50 kg/m$^3$, vorzugsweise von ca. 40 kg/m$^3$ als zweckmäßig erwiesen.

Die Herstellung der federelastischen Holzspäne erfolgt nach einem besonders bevorzugten Merkmal der Erfindung mit einem Kegelstirnplanfräskopf 4 gemäß Fig. 2 und 3, der am Ende einer z. B. motorisch betriebenen, in Pfeilrichtung drehbaren Welle 5 befestigt ist. Der Fräskopf 4 enthält eine kegel- oder kegelstumpfförmige Arbeitsfläche 4a, die mit radial angeordneten Schneidmessern versehen ist und plan gegen einen schematisch angedeuteten Stamm 6 aus Holz angelegt wird, der in Fig. 2 senkrecht zur Zeichenebene am Fräskopf 4 entlang bewegt werden kann.

Obwohl grundsätzlich auch die Anwendung von radial durchgehenden Schneidmessern möglich wäre, werden diese vorzugsweise, wie Fig. 3 zeigt, aus einer Mehrzahl von spiralisch angeordneten Schneidzähnen 7 gebildet. Dadurch wird erreicht, dass nebeneinander mehrere schmale Späne anstatt nur je ein breiter Span vom Stamm 6 abgefräst wird.

Der zur Erzielung eines besonders dünnen Spangutes für wichtig gehaltene Kegelwinkel κ des Fräskopfs 4 beträgt vorzugsweise 5° bis 30°. Für die Spanungsdicke h gilt dabei im Wesentlichen die Formel

$$h = f_z \cdot \sin\Phi \cdot \sin\kappa$$

worin $f_z = V_f/(n \cdot z)$ den Vorschub eines Schneidzahns 7 mit der Vorschubgeschwindigkeit $V_f$ des Stammes 6, der Drehzahl n der Welle 5 und der Zahl z der Schneidzähne 7 sowie Φ den Eingriffswinkel des Schneidzahns 7 bedeuten.

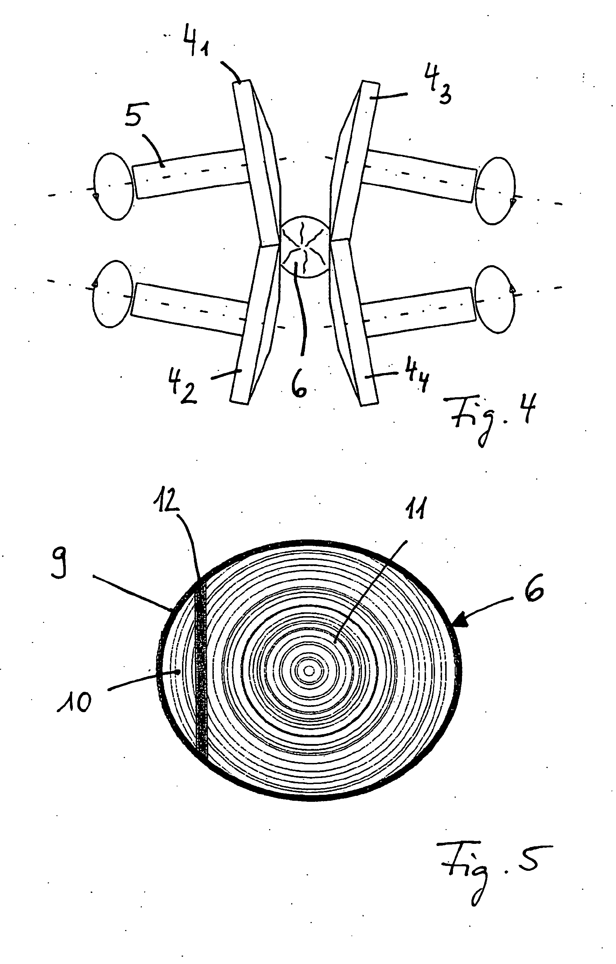

Für eine wirtschaftlich sinnvolle Herstellung wird erfindungsgemäß vorgeschlagen, ein mit wenigstens einem Fräskopf 4 nach Fig. 2 und 3 ausgerüstetes Kegelstirnplanfräswerkzeug 8 (Fig. 4) in eine übliche, mit einer Vorschubgeschwindigkeit von z. B. 80 m/min arbeitenden Spanerlinie eines Sägewerks einzubauen. Dadurch werden separate Anlagen und damit Herstellungskosten eingespart. Im Ausführungsbeispiel enthält des Fräswerkzeug 8 insgesamt vier Fräsköpfe 4 nach Fig. 2 und 3, wobei je zwei Fräsköpfe ($4_1$, $4_2$ bzw. $4_3$, $4_4$) jeweils nebeneinander bzw. in Vorschubrichtung des Stamms 6 hintereinander angeordnet sind und wobei das Paar $4_1$, $4_2$ im Vergleich zum Paar $4_3$, $4_4$ auf der diametral gegenüberliegenden Seite des Stamms 6 angeordnet ist. Dadurch erfolgt die Zerspanung in Längsrichtung des Stamms 6.

Zur Erzielung qualitativ hochwertiger, federelastischer Holzspäne 2 hat es sich als zweckmäßig erwiesen, die Stämme 6 unter Anwendung beispielsweise von waldfeuchtem Rundholz in feuchtem Zustand zu zerspanen. Ein Spangut, das mit einer Stammfeuchte u von z. B. 50 % (u = Masse des feuchten Holzes - Masse des trockenen Holzes, geteilt durch die Masse des trockenen Holzes mal 100) hergestellt wurde, ist z. B. leicht gerollt und zeigt im Gegensatz zu einem unter denselben Bedingungen, jedoch von einem trockenen Stamm 6 erhaltenen Spangut eine deutlich geringere Neigung zur Faltenbildung. Überraschend eignet sich ein derartiges, dünnes und federelastisches Spangut besonders gut für die Zwecke der vorliegenden Erfindung, da die setzungssichere Dicke der Späne mit zunehmender Ausgangsfeuchte bei der Zerspanung immer geringer wird. Offenbar ist eine Faltstruktur von Spänen für die gewünschte Federelastizität eher nachteilig als vorteilhaft.

Im Anschluss an ihre Herstellung werden die Holzspäne auf eine Restfeuchte von z. B. 8 % bis 12 % oder weniger getrocknet, bevor sie mit den Zellulosefasern vermischt werden.

Eine bevorzugte Bearbeitung eines Stammes 6 während der Zerspanung ist in Fig. 5 angedeutet. Der Stamm 6 enthält wie üblich im äußeren Bereich eine Rinde 9, die zunächst entfernt wird. Ein sich nach innen zu an die Rinde 9 anschließender Bereich 10 des Stamms 6 wird normalerweise unter Herstellung von sogenannten Hackschnitzeln zerspant, während ein innenliegender Kern 11 des Stamms 6 zur Herstellung von Brettern od. dgl. benutzt wird. Erfindungsgemäß wird demgegenüber vorgeschlagen, auf beiden Seiten des Stamms 6 und zwischen den Bereichen 10 und 11 jeweils einen Bereich 12 mit einer radialen Breite von z. B. 1 mm bis 5 mm vorzusehen, der unter Anwendung des Fräswerkzeugs 8 nach Fig. 4 der Herstellung der erfindungsgemäßen, federelastischen Holzspäne 2 (Fig. 1) dient. Dadurch wird einerseits der zur Verarbeitung von Hackschnitzeln bestimmte Bereich 10 nur geringfügig verkleinert, andererseits aber erreicht, dass die erfindungsgemäßen Holzspäne 2 in einem Bereich 12 abgearbeitet werden, in welchem der Stamm 6 bereits einen vergleichsweise großen Durchmesser hat. Dadurch ist mit einem vergleichsweise geringen Aufwand an Material und Kosten für das Fräswerkzeug 8 eine wirtschaftlich günstigere Spanerzeugung möglich, als wenn die Späne in dem direkt auf die Rinde 9 folgenden Bereich 10 erzeugt würden. Die durchschnittliche Schnitthöhe kann daher z. B. je nach Stammquerschnitt ca. 100 mm bis 300 mm betragen.

Das anfallende Spangut wird zweckmäßig unmittelbar nach seiner Erzeugung abgesaugt und über eine pneumatische Förderung einem Trockner zugeführt. Zuvor oder auch später beim Vermischen mit den Zellulosefasern kann das Spangut außerdem mit erforderlichen oder erwünschten Pilz- und Brandschutzmitteln od. dgl. versehen werden.

Die Erfindung ist nicht auf das beschriebene Ausführungsbeispiel beschränkt, das auf vielfache Weise abgewandelt werden kann. Das gilt insbesondere für die beispielhaft angegebenen Abmessungen der verarbeiteten Holzspäne und Zellulosefasern. Insbesondere können auf die beschriebene Weise sowohl lange als auch kurze Zellulosefasern verarbeitet werden. In jedem Fall ergibt sich der Vorteil, dass aufgrund der Zumischung der Holzspäne 2 die Gesamtdichte an Zellulosefasern 3 kleiner ist, weniger Zellulosematerial benötigt wird und wegen des geringeren Marktpreises für die Holzspäne eine Kostenreduzierung erzielt wird. Auch die angegebenen Fräsköpfe 4 und die mit diesen hergestellten Fräswerkzeuge 8 können anders als beschrieben ausgebildet sein. Schließlich versteht sich, dass die verschiedenen Merkmale auch in anderen als den beschriebenen und dargestellten Kombinationen angewendet werden können.

**Patentansprüche**

1.   Wärmedämmstoff mit Zellulosefasern (3), **dadurch gekennzeichnet, dass** er eine Matrix aus federelastischen, Hohlräume bildenden Holzspänen (2) enthält und die Zellulosefasern (3) in die Hohlräume eingelagert sind.

2.   Wärmedämmstoff nach Anspruch 1, **dadurch gekennzeichnet, dass** die Holzspäne (2) eine Länge von 10 mm bis 20 mm, eine Dicke von 0,05 mm bis 0,4 mm und eine Breite von 5 mm bis 15 aufweisen.

3.   Wärmedämmstoff nach Anspruch 1 oder 2, **dadurch gekennzeichnet, dass** die Zellulosefasern (3) eine Länge von 0,5 mm bis 9 mm und einen Durchmesser von 0,1 mm bis 0,2 mm aufweisen.

4.   Wärmedämmstoff nach einem der Ansprüche 1 bis 3, **dadurch gekennzeichnet, dass** die Holzspäne (2) eine Feuchte von 1 % bis 12 % aufweisen.

5.   Wärmedämmstoff nach einem der Ansprüche 1 bis 4, **dadurch gekennzeichnet, dass** die Holzspäne (2) und Zellulosefasern (3) in einem Mischungsverhältnis von 20 : 80 bis 80 : 20 Massen% vorliegen.

6.   Wärmedämmstoff nach einem der Ansprüche 1 bis 5, **dadurch gekennzeichnet, dass** er eine Setzungsdichte zwischen 30 kg/m$^3$ und 50 kg/m$^3$ aufweist.

7.   Verfahren zur Herstellung eines Zellulosefasern (3) enthaltenden Wärmedämmstoffs gemäß einem der vorhergehenden Ansprüche 1 bis 6, **dadurch gekennzeichnet, dass** federelastische Holzspäne (2) hergestellt werden, indem ein Stamm (6) aus feuchtem Holz mit einem Kegelstirnplanfräswerkzeug (8) bearbeitet wird, und dass die dadurch erhaltenen Holzspäne (2) getrocknet und mit den Zellulosefasern (3) vermischt werden.

**8.** Verfahren nach Anspruch 7, **dadurch gekennzeichnet, dass** die getrockneten Holzspäne (2) und die Zellulosefasern (3) in einem Massenverhältnis von 20 : 80 bis 80 : 20 vermischt werden.

**9.** Verfahren nach Anspruch 7 oder 8, **dadurch gekennzeichnet, dass** die Holzspäne (2) auf eine Restfeuchte von 1 % bis 12 % getrocknet werden.

**10.** Verfahren nach einem der Ansprüche 7 bis 9, **dadurch gekennzeichnet, dass** die Holzspäne (2) aus einem Bereich (12) des Stammquerschnitts erhalten werden, aus dem auch Hackschnitzel gewonnen werden.

**11.** Verfahren nach einem der Ansprüche 7 bis 10, **dadurch gekennzeichnet, dass** die Holzspäne (2) mit einem Kegelstirnplanfräswerkzeug (9) erhalten werden, das wenigstens zwei, an diametral gegenüberliegenden Stellen des Stamms (6) angeordnete Fräsköpfe (4) enthal.t

**12.** Verfahren nach Anspruch 11, **dadurch gekennzeichnet, dass** die Holzspäne (2) von jedem Fräskopf (4) aus einem ca. 1 mm bis 5 mm breiten Bereich (12) des Stamms (6) gewonnen werden.

**13.** Verfahren nach einem der Ansprüche 10 bis 12, **dadurch gekennzeichnet, dass** die Herstellung der Holzspäne (2) im Durchlaufverfahren in einer Spanerlinie eines Sägewerks erfolgt, wobei das Kegelstirnplanfräswerkzeug (8) in der Spanerlinie hinter einer der Hackschnitzelerzeugung dienenden Zerspanungsstation angeordnet wird.

**14.** Verfahren nach Anspruch 13, **dadurch gekennzeichnet, dass** ein Kegelstirnradfräswerkzeug (8) verwendet wird, das wenigstens zwei in Durchlaufrichtung hintereinander angeordnete Fräsköpfe (4) enthält.

**Claims**

**1.** Heat insulation material with cellulose fibres (3), **characterized in that** it contains a matrix of spring-elastic wood chips (2) forming cavities, and the cellulose fibres (3) are intercalated into the cavities.

**2.** Heat insulation material according to Claim 1, **characterized in that** the wood chips (2) have a length of 10 mm to 20 mm, a thickness of 0.05 mm to 0.4 mm and a width of 5 mm to 15 mm.

**3.** Heat insulation material according to Claim 1 or 2, **characterized in that** the cellulose fibres (3) have a length of 0.5 mm to 9 mm and a diameter of 0.1 mm to 0.2 mm.

**4.** Heat insulation material according to one of Claims 1 to 3, **characterized in that** the woodchips (2) have a moisture content of 1% to 12%.

**5.** Heat insulation material according to one of Claims 1 to 4, **characterized in that** the wood chips (2) and cellulose fibres (3) are in a mixture ratio of 20:80 to 80:20 % by mass.

**6.** Heat insulation material according to one of Claims 1 to 5, **characterized in that** it has a settling density of between 30 kg/m$^3$ and 50 kg/m$^3$.

**7.** Method for producing a heat insulation material containing cellulose fibres (3) according to one of the preceding Claims 1 to 6, **characterized in that** spring-elastic wood chips (2) are produced **in that** a trunk (6) of moist wood is machined by means of a bevelled face milling tool (8) and **in that** the wood chips (2) thereby obtained are dried and mixed with the cellulose fibres (3).

**8.** Method according to Claim 7, **characterized in that** the dried wood chips (2) and the cellulose fibres (3) are mixed in a mass ratio of 20:80 to 80:20.

**9.** Method according to Claim 7 or 8, **characterized in that** the wood chips (2) are dried to a residual moisture content of 1% to 12%.

**10.** Method according to one of Claims 7 to 9, **characterized in that** the wood chips (2) are obtained from a region (12) of the trunk cross section from which shavings are also obtained.

**11.** Method according to one of Claims 7 to 10, **characterized in that** the wood chips (2) are obtained by means of a bevelled face milling tool (8) which contains at least two milling heads (4) arranged at diametrically opposite locations on the trunk (6).

**12.** Method according to Claim 11, **characterized in that** the wood chips (2) are obtained in each milling head (4) from an approximately 1 mm to 5 mm wide region (12) of the trunk (6).

**13.** Method according to one of Claims 10 to 12, **characterized in that** the production of the wood chips (2) takes place by a continuous method on a chipping line of a sawmill, the bevelled face milling tool (8) being arranged on the chipping line downstream of a cutting station serving for generating shavings.

**14.** Method according to Claim 13, **characterized in that** a bevelled face milling tool (8) is used which contains at least two milling heads (4) arranged one behind the other in the continuous run direction.

## Revendications

1. Isolant thermique doté de fibres de cellulose (3), **caractérisé en ce qu'**il contient une matrice de copeaux de bois (2) élastiques, formant des espaces creux et les fibres de cellulose (3) sont stockées dans les espaces creux.

2. Isolant thermique selon la revendication 1, **caractérisé en ce que** les copeaux de bois (2) présentent une longueur de 10 mm à 20 mm, une épaisseur de 0,05 mm à 0,4 mm et une largeur de 5 mm à 15 mm.

3. Isolant thermique selon la revendication 1 ou 2, **caractérisé en ce que** les fibres de cellulose (3) présentent une longueur de 0,5 mm à 9 mm et un diamètre de 0,1 mm à 0,2 mm.

4. Isolant thermique selon l'une des revendications 1 à 3, **caractérisé en ce que** les copeaux de bois (2) présentent une humidité de 1 % à 12 %.

5. Isolant thermique selon l'une des revendications 1 à 4, **caractérisé en ce que** les copeaux de bois (2) et les fibres de cellulose (3) se présentent en un rapport de mélange de 20 : 80 à 80 : 20 % en masse.

6. Isolant thermique selon l'une des revendications 1 à 5, **caractérisé en ce qu'**il présente une densité d'occupation entre 30 kg/m$^2$ et 50 kg/m$^2$.

7. Procédé de production d'un isolant thermique contenant des fibres de cellulose (3) selon l'une des revendications 1 à 6, **caractérisé en ce que** des copeaux de bois (2) élastiques sont produits en traitant une souche (6) de bois humide avec un outil de fraisage à pignons coniques (8) et **en ce que** les copeaux de bois (2) ainsi obtenus sont séchés et mélangés aux fibres de cellulose (3).

8. Procédé selon la revendication 7, **caractérisé en ce que** les copeaux de bois séchés (2) et les fibres de cellulose (3) sont mélangés en un rapport en masse de 20 : 80 à 80 : 20.

9. Procédé selon la revendication 7 ou 8, **caractérisé en ce que** les copeaux de bois (2) sont séchés à une humidité résiduelle de 1 % à 12 %.

10. Procédé selon l'une des revendications 7 à 9, **caractérisé en ce que** les copeaux de bois (2) sont obtenus dans une zone (12) de coupe transversale de la souche à partir de laquelle des éclats de bois sont obtenus.

11. Procédé selon l'une des revendications 7 à 10, **caractérisé en ce que** les copeaux de bois (2) sont obtenus avec un outil de fraisage à pignons coniques (9) qui contient au moins deux têtes de fraisage (4) disposées sur des sites diamétralement opposés de la souche (6).

12. Procédé selon la revendication 11, **caractérisé en ce que** les copeaux de bois (2) sont obtenus de chaque tête de fraisage (4) à partir d'une zone (12) d'environ 1 mm à 5 mm de largeur de la souche (6).

13. Procédé selon l'une des revendications 10 à 12, **caractérisé en ce que** la production des copeaux de bois (2) dans le processus d'avancement s'effectue dans une ligne de coupe d'une scierie, l'outil de fraisage à pignons coniques (8) étant disposé dans la ligne de coupe à l'arrière d'un poste de formation de copeaux servant à générer des éclats de bois.

14. Procédé selon la revendication 13, **caractérisé en ce qu'**un outil de fraisage à pignons coniques (8) est utilisé, contenant au moins deux têtes de fraisage (4) disposées l'une derrière l'autre dans le sens de l'avancement.

*Fig. 1*

*Fig. 2*

*Fig. 3*

$4_1$

$4_3$

5

$4_2$

6

$4_4$

Fig. 4

12

11

9

6

10

Fig. 5

**EP 2 045 408 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19906138 A1
- DE 10326515 A1
- DE 19516186